# EUROPEAN PATENT APPLICATION

(11) **EP 4 697 453 A1**
(43) Date of publication of application: **18.02.2026**
(21) Application number: 24909629.8
(22) Date of filing: 28.06.2024
(51) Int. Cl.: H01M 10/613

(54) **COOLING DEVICE AND MANUFACTURING METHOD THEREFOR, BATTERY MODULE AND BATTERY PACK**

(30) Priority: 29.12.2023 CN 202323664832 U
(71) Applicant: Eve Energy Storage Co., Ltd, Wuhan, Hubei 430074 (CN)
(72) Inventor: LEI, Guijie, Wuhan, Hubei 430074 (CN); ZHU, Zhonghuai, Wuhan, Hubei 430074 (CN); LI, Hexin, Wuhan, Hubei 430074 (CN); MA, Shuzhu, Wuhan, Hubei 430074 (CN); GONG, Muhong, Wuhan, Hubei 430074 (CN)
(74) Representative: Zimmermann, Tankred Klaus
(86) International application number: PCT/CN2024/102441
(87) International publication number: WO 2025/138669

(57) **Abstract**

A cooling device is provided. The cooling device includes a first and second cooling members each including a first side and a second side oppositely disposed. The first cooling member is provided with a first flow channel, and the second cooling member is provided with a second flow channel. The first side of the first cooling member is fixedly connected to the second side of the second cooling member. The first side of the first cooling member is provided with a first gap. The second side of the second cooling member is provided with a second gap. The first flow channel communicates with the second flow channel through the first gap and the second gap.

## Description

This application claims priority to Chinese Patent Application No. 202323664832.7, filed on December 29, 2023, the disclosure of which is incorporated herein by reference in its entirety.

### Technical Field

The present invention relates to the field of battery technologies, and in particular to a cooling device and a manufacturing method thereof, a battery module, and a battery pack.

### Background

The cooling plate is an important part of the active heat dissipation system of the energy storage battery, and good temperature control relates to the life of the energy storage battery. The cooling plate is produced firstly by stamping the aluminum plate by means of a stamping apparatus and a die to form a flow channel plate, and then by sequentially undergoing processes such as graphite screen printing, gas blowing, cutting, and punching.

### Summary

In the related art, the processing processes of the cooling plate are complicated, resulting in the fact that it is not convenient to produce a cooling plate with a corresponding size to realize cooling and heat dissipation for a partially integrated large battery module.

In a first aspect, embodiments of the present application provide a cooling device including: a first cooling member and a second cooling member each including a first side and a second side oppositely disposed, the first cooling member being provided with a first flow channel, and the second cooling member being provided with a second flow channel;
in which the first side of the first cooling member is fixedly connected to the second side of the second cooling member, the first side of the first cooling member is provided with a first gap, the second side of the second cooling member is provided with a second gap, and the first flow channel communicates with the second flow channel through the first gap and the second gap.

In a second aspect, embodiments of the present application provide a manufacturing method of the above-mentioned cooling device, the manufacturing method including:
forming the first cooling member by an aluminum extrusion molding process;
forming the second cooling member by the aluminum extrusion molding process;
connecting the first side of the first cooling member and the second side of the second cooling member;
processing the first flow channel on the first cooling member; and
processing the second flow channel on the second cooling member.

In a third aspect, embodiments of the present application provide a battery module including the above-mentioned cooling device, and a battery component, in which the cooling device is configured for cooling the battery component.

In a fourth aspect, embodiments of the present application provide a battery pack including a case and a plurality of battery modules disposed inside the case, in which the battery modules are each the above-mentioned battery module.

### Advantages of the Application

According to the cooling device provided in the present application, the cooling device is divided into a first cooling member and a second cooling member which can be independently produced, and the first cooling member and the second cooling member are communicated through the first gap and the second gap. In this way, the cooling device is suitable for heat dissipation and cooling of an integrated large battery module, thereby improving the technical problem that the production of the cooling device is difficult.

According to the manufacturing method of the cooling device provided in the present application, the first cooling member and the second cooling member are separately manufactured, and the first cooling member and the second cooling member are connected, so that the technical problem that the production of the cooling device is difficult can be solved.

The battery module provided in the present application is designed on the basis of the above-mentioned cooling device, and the advantageous effects thereof are described in the advantageous effects of the cooling device, and are not described here.

The battery pack provided in the present application is designed based on the above-mentioned battery module, and the advantageous effects thereof are described in the advantageous effects of the battery module, and are not described herein again.

### Brief Description of the Drawings

FIG. 1 is a perspective view of a cooling device according to Example 2 of the present application;
FIG. 2 is an exploded view of a cooling device according to Example 2 of the present application;
FIG. 3 is a schematic structural diagram of a first cooling member according to Example 2 of the present application;
FIG. 4 is a schematic structural diagram of a second cooling member according to Example 2 of the present application;
FIG. 5 is a cross-sectional view of a cooling device according to Example 2 of the present application;
FIG. 6 is a schematic structural diagram of a cooling device according to Example 5 of the present application;
FIG. 7 is a cross-sectional view of a first closure member according to Example 5 of the present application;
FIG. 8 is a cross-sectional view of a second closure member according to Example 5 of the present application;
FIG. 9 is a cross-sectional view of a cooling device according to Example 5 of the present application;
FIG. 10 is a schematic structural diagram of a third cooling member according to Example 4 of the present application; and
FIG. 11 is a schematic structural diagram of an insulating layer provided on a cooling member according to Example 2 of the present application.

### Reference signs:

100. cooling device; 1. first cooling member; 110. first side of the first cooling member; 120. second side of the first cooling member; 130. first end of the first cooling member; 140. second end of the first cooling member; 11. first connecting plate; 111. first gap; 12. first plate; 121. water inlet; 13. second plate; 14. first baffle plate; 150. first flow channel; 141. first flow channel port; 15. first splitter plate; 16. second splitter plate; 17. first main flow channel; 18. second main flow channel; 19. first opening; 2. second cooling member; 210. first side of the second cooling member; 220. second side of the second cooling member; 230. first end of the second cooling member; 240. second end of the second cooling member; 21. second connecting plate; 212. second gap; 22. third plate; 221. water outlet; 23. fourth plate;
24. second baffle plate; 250. second flow channel; 241. second flow channel port; 25. third splitter plate; 26. fourth splitter plate; 27. third main flow channel; 28. fourth main flow channel; 171. first split-channel; 181. second split-channel; 271. third split-channel; 281. fourth split-channel; 29. second opening; 3. third cooling member; 31. third flow channel; 310, first side of the third cooling member; 320, second side of the third cooling member; 32. third gap; 6. insulating layer; 7. closure member; 71. first closure member; 711. first body; 712. first closure portion; 713. third baffle plate; 714. communication port; 72. second closure member; 721. second body; 722. second closure portion; 8. fixed cross beam; 9. hoisting longitudinal beam; 10. receiving groove; and 101. fifth main flow channel.

### Detailed Description of the Embodiments

In the present application, unless otherwise specified, directional terms such as "upper" and "lower" generally refer to the upper and lower parts of the device in actual use or working state, specifically refer to the drawing directions in the accompanying drawings; while "inside" and "outside" refer to the outline of the device.

### Example 1

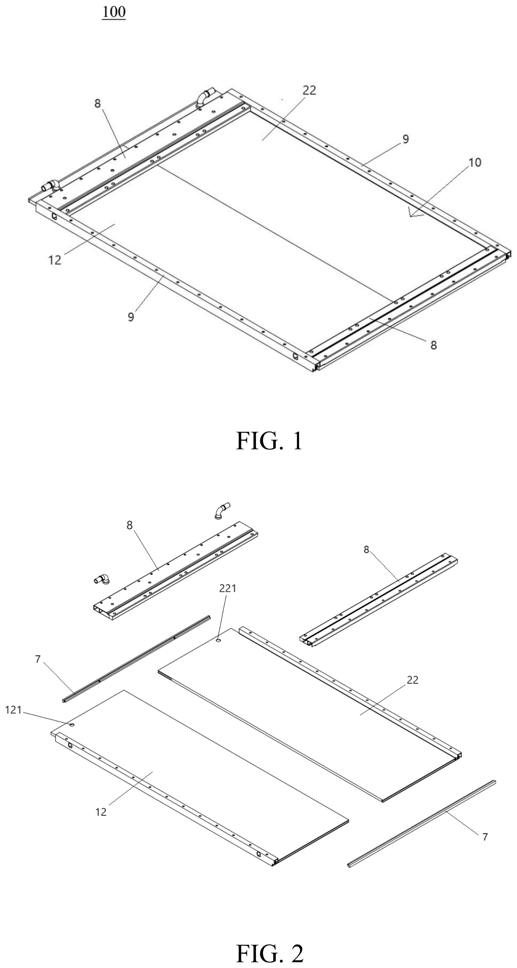

Referring to FIGS. 1 and 2, embodiments of the present application provides a cooling device 100 including:
a first cooling member 1 including a first side 110 of the first cooling member and a second side 120 of the first cooling member oppositely disposed; and a second cooling member 2 including a first side 210 of the second cooling member and a second side 220 of the second cooling member oppositely disposed; in which the first cooling member 1 is provided with a first flow channel 150, and the second cooling member 2 is provided with a second flow channel 250;
in which the first side 110 of the first cooling member is fixedly connected to the second side 220 of the second cooling member, the first side 110 of the first cooling member is provided with a first gap 111; the second side 220 of the second cooling member is provided with a second gap 212; and the first flow channel 150 communicates with the second flow channel 250 through the first gap 111 and the second gap 212.

Compared to producing the whole larger cooling member, the cooling device 100 is divided into the first cooling member 1 and the second cooling member 2 enable of independent production, thereby reducing the production difficulty and improving the yield. The first cooling member 1 and the second cooling member 2 are communicated through the first gap 111 and the second gap 212, so that the first cooling member 1 and the second cooling member 2 can be fixedly mounted, and the communication mode is simple and convenient to operate.

### Example 2

Referring to FIGS. 1 and 2, embodiments of the present application provide a cooling device 100 including a first cooling member 1, a second cooling member 2, and a closure member 7.

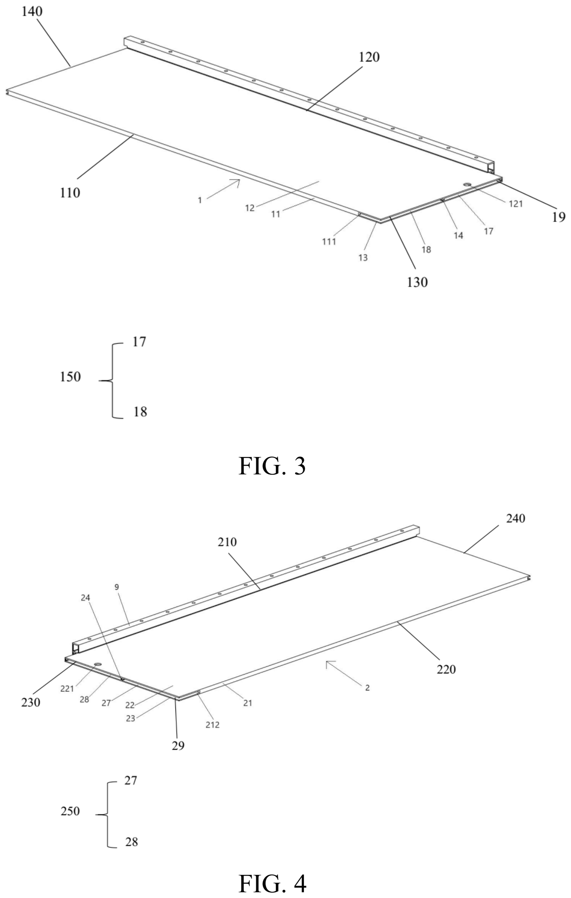

With reference to FIGS. 3, 4 and 5, the first cooling member 1 includes a first side 110 of the first cooling member and a second side 120 of the first cooling member oppositely disposed, and the second cooling member 2 includes a first side 210 of a second cooling member and a second side 220 of a second cooling member oppositely disposed. The first cooling member 1 is provided with a first flow channel 150, and the second cooling member 2 is provided with a second flow channel 250.

The first cooling member 1 includes a first connecting plate 11, a first plate 12, a second plate 13, a first baffle plate 14, a plurality of first splitter plates 15, and a plurality of second splitter plates 16. The first connecting plate 11 is connected between the first plate 12 and the second plate 13 to enclose at least a part of the first flow channel. The first side of the first cooling member 1 is provided with a first gap 111. That is, the first connecting plate 11 is provided with a first gap 111.

The first baffle plate 14 is connected between the first plate 12 and the second plate 13 to divide the first flow channel 150 into a first main flow channel 17 and a second main flow channel 18. The first baffle plate 14, the first connecting plate 11, a portion of the first plate 12 and a portion of the second plate 13 enclose the second main flow channel 18.

The first splitter plates 15 are arranged side by side and connected between the first plate 12 and the second plate 13 to divide the first main flow channel 17 into a plurality of first split-channels 171 which communicate with each other at respective two ends thereof. A plurality of second splitter plates 16 are arranged side by side and connected between the first plate 12 and the second plate 13 to divide the second main flow channel 18 into a plurality of second split-channels 181 which communicate with each other at respective two ends thereof. An end of the first baffle plate 14 remote from the first gap 111 is provided with a first flow channel port 141, and the first main flow channel 17 and the second main flow channel 18 communicate with the first flow channel port 141.

The second cooling member 2 includes a second connecting plate 21, a third plate 22, a fourth plate 23, a second baffle plate 24, a plurality of third splitter plate 25, and a plurality of fourth splitter plate 26. The second connecting plate 21 is connected between the third plate 22 and the fourth plate 23 to enclose at least a portion of the second flow channel 250. A second side of the second cooling member 2 is provided with a second gap 212. That is, the second connecting plate 21 is provided with the second gap 212. The first flow channel 150 communicates with the second flow channel 250 through the first gap 111 and the second gap 212.

The second baffle plate 24 is connected between the third plate 22 and the fourth plate 23 to divide the second flow channel 250 into a third main flow channel 27 and a fourth main flow channel 28. The second baffle plate 24, the second connecting plate 21, a portion of the third plate 22 and a portion of the fourth plate 23 enclose the third main flow channel 27.

The third splitter plates 25 are arranged side by side and connected between the third plate 22 and the fourth plate 23 to divide the third main flow channel 27 into a plurality of third split-channels 271 which communicate with each other at respective two ends thereof. A plurality of fourth splitter plates 26 are arranged side by side and connected between the third plate 22 and the fourth plate 23 to divide the fourth main flow channel 28 into a plurality of fourth split-channels 281 which communicate with each other at respective two ends thereof. A second flow channel port 241 is provided at an end of the second baffle plate 24 remote from the second gap 212, and the third main flow channel 27 and the fourth main flow channel 28 communicate with each other at the second flow channel port 241.

The cooling liquid in the cooling device 100 is divided into different areas by the first baffle plate 14, the second baffle plate 24, the first splitter plate 15, the second splitter plate 16, the third splitter plate 25, and the fourth splitter plate 26, so that the heat exchange speed inside and outside the cooling device 100 is increased, and the heat exchange effect is improved.

The first plate 12 is provided with a water inlet 121 communicating with an end of the first main flow channel 17 remote from the first flow channel port 141. The third plate 22 is provided with a water outlet 221 communicating with an end of the fourth main flow channel 28 remote from the second flow channel port 241. A flow direction of the cooling liquid in the first cooling member 1 and the second cooling member 2 is a following sequence: the water inlet 121, the first main flow channel 17, the first flow channel port 141, the second main flow channel 18, the first gap 111, the second gap 212, the third main flow channel 27, the second flow channel port 241, the fourth main flow channel 28, and the water outlet 221.

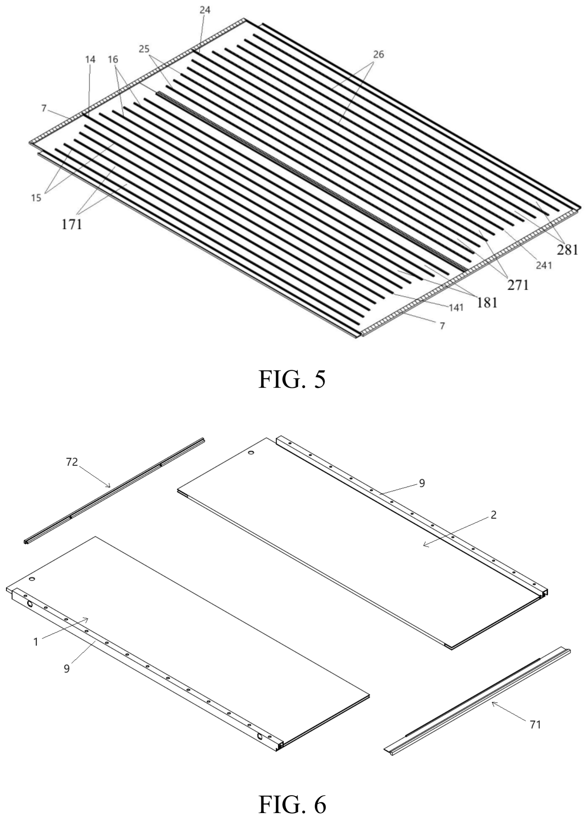

Referring to FIG. 5, a projection, which is in a direction perpendicular to the first plate 12, of a virtual line connecting an end of each of the first splitter plates 15 adjacent to the first flow channel port 141 and an end of each of the second splitter plates 16 adjacent to the first flow channel port 141 protrudes in a direction away from the first flow channel port 141. A projection, which is in a direction perpendicular to the third plate 22, of a virtual line connecting one end of each of the third splitter plates 25 adjacent to the first flow channel port 141 and one end of each of the fourth splitter plates 26 adjacent to the first flow channel port 141 protrudes in a direction away from the second flow channel port 241.

A distance between an end of each of the first splitter plates 15 which is remote from the first flow channel port 141 and an end of the first cooling member 1 remote from the first flow channel port 141, and a distance between an end of each of the second splitter plates 16 remote from the first flow channel port 141 and the end of the first cooling member 1 remote from the first flow channel port 141 are shortened along with approaching the first baffle plate 14. A distance between an end of each of the third splitter plates 25 remote from the second flow channel port 241 and an end of the second cooling member 2 remote from the second flow channel port 241, and a distance between an end of each of the fourth splitter plates 26 remote from the second flow channel port 241 and the end of the second cooling member 2 remote from the second flow channel port 241 are shortened along with approaching the second splitter plate 24. According to the positions of the water inlet 121 and the water outlet 221 and the communication positions of the first gap 111 and the second gap 212 with the second flow channel 250, it can respectively design the positional relationship between the two ends of each of the first splitter plates 15 and the first cooling member 1, or the two ends of each of the first splitter plates 15 and the second cooling member 2; between two ends of each of the second splitter plates 16 and the first cooling member 1, or the two ends of each of the second splitter plates 16 and the second cooling member 2; between two ends of each of the third splitter plates 25 and the first cooling member 1, or the two ends of each of the third splitter plates 25 and the second cooling member; and between two ends of each of the fourth splitter plates 26 and the first cooling member 1, or the two ends of each of the fourth splitter plates 26 and the second cooling member 2. In this way, it is ensured that the flow rates of the first split-channels 171, the second split-channels 181, the third split-channels 271 and the fourth split-channels 281 are as equal as possible, so that the cooling liquid fills the first flow channel 150 and the second flow channel 250, thereby improving the heat exchange efficiency.

Referring to FIG. 2, the first end 130 of the first cooling member and the second end 140 of the first cooling member are each provided with a first opening 19, and the first end 230 of the second cooling member and the second end 240 of the second cooling member are each provided with a second opening 29. The number of the closure members 7 are two, and the two closure members 7 are provided at two ends of the cooling device 100. Namely, one of the two closure members 7 is used for simultaneously closing a first opening 19 of the first cooling member 1 and a second opening 29 of the second cooling member 2, and the other closure member 7 is used for simultaneously closing another first opening 19 of the first cooling member 1 and another second opening 29 of the second cooling member 2. So, it can achieve the sealing of the first flow channel 150 and the second flow channel 250.

The closure member 7 includes a body provided in the first cooling member 1 and the second cooling member 2, and a closure portion connected to a side of the body for closing the first opening 19 and the second opening 29.

Referring to FIG. 1, a cooling device 100 further includes two fixed cross beams 8 and two hoisting longitudinal beams 9. Two fixed cross beams 8 are located at two ends of the cooling device 100 respectively, and two hoisting longitudinal beams 9 are located at two sides of the cooling device 100 respectively. The two fixed cross beams 8 are fixed to the first ends of both the first cooling member 1 and the second cooling member 2, and fixed to the second ends of both the first cooling member 1 and the second cooling member 2, respectively. The two hoisting longitudinal beams 9 are fixed to the second side 120 of the first cooling member 1 and the first side 210 of the second cooling member 2, respectively. Hoisting holes are provided in the hoisting longitudinal beam 9 to facilitate installation of the cooling device 100.

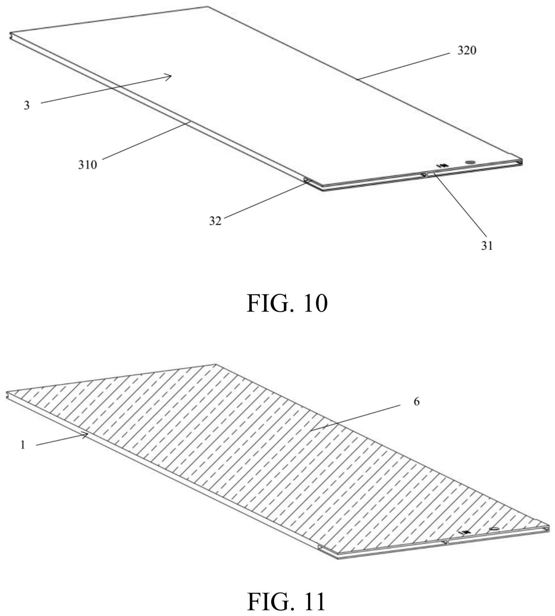

Referring to FIGS. 1 and 11, the two fixed cross beams 8, the two hoisting longitudinal beams 9, the first cooling member 1 and the second cooling member 2 are enclosed into a receiving groove 10 for accommodating the battery module. An insulating layer 6 is provided at a bottom of the receiving groove 10, that is, on upper surfaces of both the first cooling member 1 and the second cooling member 2. The insulating layer 6 may be made of a material such as insulating paint or an insulating blue film, so as to play the role of insulating the cooling device 100 and the battery module.

Embodiments of the present application further provide a manufacturing method of a cooling device 100. Specifically, a first cooling member 1 and a second cooling member 2 are made by the aluminum extrusion molding process, then a second side of the first cooling member 1 and a first side of the second cooling member 2 are fixed together by friction stir welding, and then a first flow channel 150 and a second flow channel 250 are machined by a numerical control machine to form a first baffle plate 14, a second baffle plate 24, a first splitter plate 15, a second splitter plate 16, a third splitter plate 25, and a fourth splitter plate 26. The two closure members 7, the two fixed cross beams 8 and the two hoisting longitudinal beams 9 are welded by argon arc welding to corresponding portions of both the first cooling member 1 and the second cooling member 2. Compared with the processing method in the related art, the processing flow can be saved and the processing efficiency can be improved.

Embodiments of the present application further provide a battery module including the above-mentioned cooling device 100 and a battery component. The cooling device is used for cooling the battery component. The battery component may be a cylindrical battery or a square battery.

### Example 3

There is a difference from Example 2 in that, as shown in FIG. 10, the cooling device 100 further includes a third cooling member 3 positioned between the first cooling member 1 and the second cooling member 2, and the third cooling member 3 is provided with a third flow channel 31. The third cooling member 3 includes a first side 310 of the third cooling member and a second side 320 of the third cooling member oppositely disposed. The first side 310 of the third cooling member and the second side 320 of the third cooling member are each provided with a third gap 32 communicating with the third flow channel 31. The two third gaps 32 communicate with the first gap 111 and the second gap 212, respectively. The third cooling member 3 is assembled with the first cooling member 1 and the second cooling member 2 by friction stir welding. The structure of the third flow channel 31 of the third cooling member 3 is the same as the structure of the first flow channel 150 of the first cooling member 1, so that the differences among the first cooling member 1, the second cooling member 2 and the third cooling member 3 are only different in the number of gaps, thereby facilitating mass production and rapid processing. Thus, there is a more simple process with respect to the related art.

### Example 4

There is a difference from the Example 3 in that, the cooling device 100 further includes a plurality of third cooling members 3 arranged side by side in a direction of the first cooling member 1 directing toward the second cooling member 2; and the two third gaps 32 of the third cooling member 3 closest to the first cooling member 1 respectively communicate with the first gap 111, and the third gap 32 of the third cooling member 3 adjacent to the closest third cooling member 3. Further, the two third gaps 32 of the third cooling member 3 closest to the second cooling member 2 respectively communicate with the second gap 212, and a third gap 32 of the third cooling member 3 adjacent to the closest third cooling member 3. The third cooling members 3 are provided to adapt to the cooling and the heat dissipation of the larger battery module.

### Example 5

There is a difference from Example 2 as follows.

Referring to FIG. 6, the closure member 7 facing the first flow channel port 141 and the second flow channel port 241 includes a first closure member 71 and a second closure member 72. The first closure member 71 is provided at a first end of the first cooling member 1 and a first end of the second cooling member 2. The second closure member 72 is provided at a second end of the first cooling member 1 and a second end of the second cooling member 2.

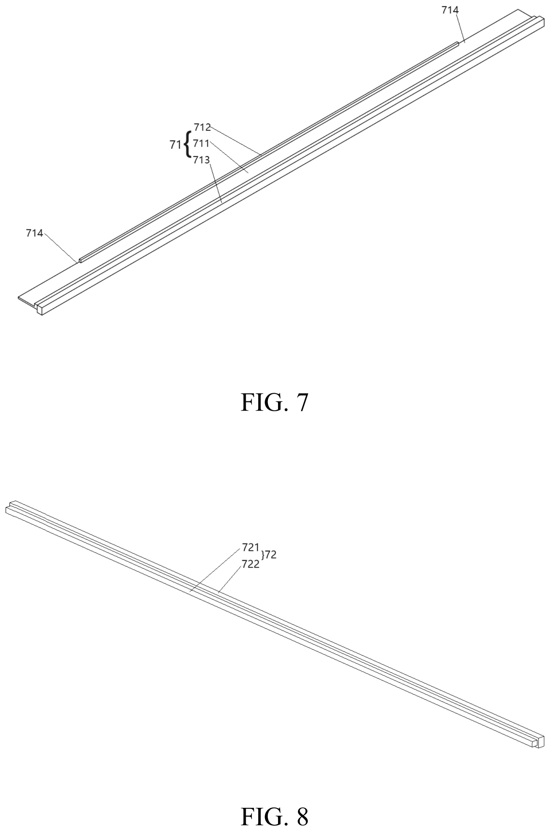

Referring to FIG. 7, the first closure member 71 includes a first body 711, a first closure member 712 provided on a side of the first body 711, and a third baffle plate 713. The third baffle plate 713 and the first body 711 are located in the first cooling member 1 and the second cooling member 2. The third baffle plate 713, the first cooling member 1 and the second cooling member 2 together form a fifth main flow channel 101. Both ends of the third baffle plate 713 are each provided with a communication port 714. A part of the first split-channel 171 and a part of the fourth split-channel 281 are communicated with the fifth main flow channel 101 through the two communication ports 714. The first closure portion 712 is used for simultaneously blocking the first opening 19 and the second opening 29.

Referring to FIG. 8, the second closure member 72 includes a second body 721 and a second closure portion 722 provided on a side of the second body 721. The second body 721 is located in the first cooling member 1 and the second cooling member 2. The second closure portion 722 serves to block the other first opening 19 and the other second opening 29 simultaneously. The structure of the two closure members 7 in Example 2 is the same as that of the second closure member 72 in the present Example.

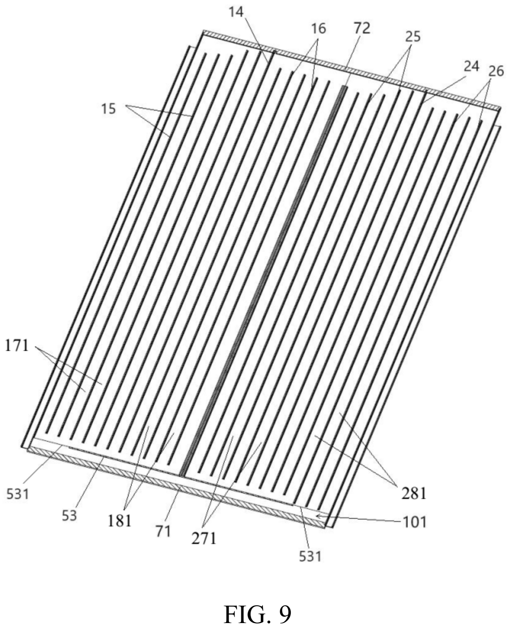

Referring to FIG. 9, a distance between an end of each of the first splitter plates 15 remote from the first opening 19 and the end of the first cooling member 1 remote from the first opening 19 is shortened along with approaching the first splitter plate 14. A distance between an end of each of the plurality of third splitter plates 25 remote from the second opening 29 and an end of the second cooling member 2 remote from the second opening 29 is shortened in a direction away from the second gap 212. In this way, it can enable the flow rates of the first split-channel 171, the second split-channel 181, the third split-channel 271, and the fourth split-channel 281 as equal as possible, enable the cooling liquid to fill in the first flow channel 150 and the second flow channel 250, thereby improving the heat exchange efficiency. A perpendicular distance between the third splitter plate 713 and an end of the fourth splitter plate 26 directly opposite to the communication port 714 is smaller than a perpendicular distance between the fourth splitter plate 26 and the third splitter plate 713. As a result, the cross flow between the fifth main flow channel 101 and the fourth main flow channel 28 is reduced, so that the flow rate of the cooling liquid in the cooling device 100 is not affected.

Due to the arrangement of the fifth main flow channel 101, a distance between the end of the first splitter plate 15 adjacent to the fifth main flow channel 101 and the fifth main flow channel 101, a distance between the end of the second splitter plate 16 adjacent to the fifth main flow channel 101 and the fifth main flow channel 101, a distance between the end of the third splitter plate 25 adjacent to the fifth main flow channel 101 and the fifth main flow channel 101, and a distance between the end of the fourth splitter plate 26 adjacent to the fifth main flow channel 101 and the fifth main flow channel 101 are the same. The distance between the end of each of the first splitter plates 15 remote from the first flow channel port 141 and the end of the first cooling member 1 remote from the first flow channel port 141 is shortened as the first splitter plate 14 is approached. The distance between the end of each of the plurality of third splitter plates 25 remote from the second flow channel port 241 and the end of the second cooling member 2 remote from the second flow channel port 241 is shortened as the second baffle plate 24 is approached. In this way, the flow rates at different portions of the cooling device 100 are equalized.

On the basis of the flow direction of the cooling liquid in the cooling device 100 of Example 2, the flow of the cooling liquid introduced into the fifth main flow channel 101 from the first main flow channel 17 is additionally increased, and the cooling liquid in the fifth main flow channel 101 flows out from a part of the fourth main flow channel 28. The heat exchange efficiency of the cooling device 100 is improved through the fifth main flow channel 101.

### Example 6

Embodiments of the present application provide a battery pack including a case and a plurality of battery modules disposed inside the case. Each battery module includes the above-mentioned cooling device 100 and a battery component. The colling device 100 is used for cooling the battery component. The battery component may be a cylindrical battery or a square battery.

## Claims

1. A cooling device comprising:
a first cooling member (1) and a second cooling member (2), the first cooling member (1) comprising a first side (110) and a second side (120) oppositely disposed, the second cooling member (2) comprising a first side (210) and a second side (220) oppositely disposed, the first cooling member (1) being provided with a first flow channel (150), and the second cooling member (2) being provided with a second flow channel (240);
wherein the first side (110) of the first cooling member (1) is fixedly connected to the second side (220) of the second cooling member (2), the first side (110) of the first cooling member (1) is provided with a first gap (111), the second side (220) of the second cooling member (2) is provided with a second gap (212), and the first flow channel (150) communicates with the second flow channel (250) through the first gap (111) and the second gap (212).

2. The cooling device according to claim 1, wherein the first cooling member (1) comprises a first connecting plate (11), and a first plate (12) and a second plate (13) oppositely disposed; the first connecting plate is connected between the first plate (12) and the second plate (13) to enclose at least a part of the first flow channel (150); the second cooling member (2) comprises a second connecting plate (21), and a third plate (22) and a fourth plate (23) oppositely disposed; the second connecting plate (21) is connected between the third plate (22) and the fourth plate (23) to enclose at least a part of the second flow channel (250), wherein the first gap (111) is provided on the first connecting plate (11), the second gap (212) is provided on the second connecting plate (21), and the first connecting plate (11) is fixedly connected to the second connecting plate (21).

3. The cooling device according to claim 2, wherein the first cooling member (1) further comprises a first baffle plate (14) connected between the first plate (12) and the second plate (13) to divide the first flow channel (150) into a first main flow channel (17) and a second main flow channel (18); an end of the first baffle plate (14) is provided with a first flow channel port (141); the first main flow channel (17) communicates with the second main flow channel (18) via the first flow channel port (141); the second cooling member (2) further comprises a second baffle plate (24) located between the third plate (22) and the fourth plate (23); the second baffle plate (24) is connected to the third plate (22) and the fourth plate (23) to divide the second flow channel (250) into a third main flow channel (27) and a fourth main flow channel (28); an end of the second baffle plate (24) is provided with a second flow channel port (241), the third main flow channel (27) communicates with the fourth main flow channel (28) via the second flow channel port (241); and the first main flow channel (17) and the fourth main flow channel (28) are located on two sides of both the second main flow channel (18) and the third main flow channel (27).

4. The cooling device according to claim 3, wherein the first cooling member (1) further comprises a plurality of first splitter plates (15) and a plurality of second splitter plates (16), the plurality of first splitter plates (15) are connected between the first plate (12) and the second plate (13) to divide the first main flow channel (17) into a plurality of first split-channels (171), the plurality of second splitter plates (16) are connected between the first plate (12) and the second plate (13) to divide the second main flow channel (18) into a plurality of second split-channels (181); the second cooling member (2) further comprises a plurality of third splitter plates and a plurality of fourth splitter plates, the third splitter plates are (25) connected between the third plate (22) and the fourth plate (23) to divide the third main flow channel (27) into a plurality of third split-channels (271), and the plurality of fourth splitter plates (26) are connected between the third plate (22) and the fourth plate (23) to divide the fourth main flow channel (28) into a plurality of fourth split-channels (281).

5. The cooling device according to claim 4, further comprising two closure members (7), wherein the first cooling member (1) comprises a first end (130) and a second end (140) oppositely disposed, the second cooling member (2) comprises a first end (230) and a second end (240) oppositely disposed, the first end (130) of the first cooling member (1) and the second end (140) of the first cooling member (1) are each provided with a first opening (19) communicating with the first flow channel (150), the first end (230) of the second cooling member (2) and the second end (240) of the second cooling member (2) are each provided with a second opening (29) communicating with the second flow channel (250), and each of the two closure members (7) is configured for closing the first opening (19) and the second opening (29).

6. The cooling device according to claim 5, wherein the two closure members (7) comprise a first closure member (71) provided adjacent to the first end (130) of the first cooling member and the first end (230) of the second cooling member; the first closure member (71) comprises a first body (711), a first closure portion (712) provided on a side of the first body (711), and a third baffle plate (713) provided on an other side of the first body (711); the third baffle plate (713) and the first body (711) are located in the first cooling member (1) and the second cooling member (2) and enclose a fifth main flow channel (101) together with the first cooling member (1) and the second cooling member (2); and two ends of the third baffle plate (713) are provided with respective communication ports (714), and a part of the first flow channel (171) and a part of the fourth flow channel (281) communicate with the fifth main flow channel (101) through the communication ports;
and/or the two closure members (7) comprise a second closure member (72) disposed adjacent to the second end; the second closure member (72) comprises a second body (721) located in the first cooling member (1) and the second cooling member (2), and a second closure portion (722) located on a side of the second body (721), the second closure portion (722) is configured for closing the first opening (19) of the second end (140) of the first cooling member and the second opening (29) of the second end (240) of the second cooling member.

7. The cooling device according to claim 6, wherein a perpendicular distance between an end of the fourth splitter plate (26) directly opposite to the communication port (714) and the third baffle plate (713) is smaller than a perpendicular distance between the fourth splitter plate (26) and the third baffle plate (713).

8. The cooling device according to claim 6 or 7, wherein a distance between an end of each of the plurality of the first splitter plates (15) remote from the first opening (19) and an end of the first cooling member (1) remote from the first opening (19) is shortened along with approaching the first baffle plates (14).

9. The cooling device according to claim 6 or 7 or 8, wherein a distance between an end of each of the plurality of third splitter plates (25) remote from the second opening (29) and an end of the second cooling member (2) remote from the second opening (29) is shortened in a direction away from the second gap (212).

10. The cooling device according to any one of claims 1 to 9, further comprising one or more third cooling members (3) disposed between the first cooling member (1) and the second cooling member (2), wherein the third cooling member (3) is provided with a third flow channel (31), the third cooling member (3) comprises a first side (310) of the third cooling member and a second side (320) of the third cooling member oppositely disposed, the first side (310) of the third cooling member and the second side (320) of the third cooling member are provided with respective third gaps (32) in communication with the third flow channel (31), wherein one of the third gaps (32) is in communication with the first gap (111), and an other one of the third gaps (32) is in communication with the second gap (212).

11. The cooling device according to claim 10, wherein the third cooling members (3) are connected side by side in a direction of the first cooling member (1) directing towards the second cooling member (2), adjacent ones of the third cooling members (3) communicate with each other through the third gap (32), two of the third gaps (32) of one of the third cooling members (3) which is proximal to the first cooling member (1) communicate respectively with the first gap and one of the third gaps (32) of one of the third cooling members adjacent to the proximal third cooling member (111), and two of the third gaps (32) of one of the third cooling members (3) which is proximal to the second cooling member (2) communicate respectively with (32)the second gap and one of the third gaps of one of (32)the third cooling members adjacent to the proximal third cooling member (212).

12. The cooling device according to any one of claims 1 to 11, further comprising an insulating layer provided on the first cooling member (1) and the second cooling member (2) to insulate from a battery module.

13. A manufacturing method for the cooling device according to claim 1, the manufacturing method comprising:
forming the first cooling member by an aluminum extrusion molding process;
forming the second cooling member by the aluminum extrusion molding process;
connecting the first side of the first cooling member and the second side of the second cooling member;
processing the first flow channel on the first cooling member; and
processing the second flow channel on the second cooling member.

14. A battery module comprising the cooling device according to any one of claims 1 to 12, further comprising a battery component, wherein the cooling device is configured to cool the battery component.

15. A battery pack comprising a case and a plurality of battery modules disposed inside the case, wherein the battery modules are each the battery module according to claim 14.
